Europäisches Patentamt

European Patent Office

Office européen des brevets

(19)

(11) Publication number: **0 459 306 A2**

## EUROPEAN PATENT APPLICATION

(12)

(21) Application number: **91108387.1**

(22) Date of filing: **24.05.91**

(51) Int. Cl.⁵: **G02F 1/1347, G02F 1/137**

(30) Priority: **01.06.90 EP 90110442**

(43) Date of publication of application:
**04.12.91 Bulletin 91/49**

(84) Designated Contracting States:
**DE GB IT**

(71) Applicant: **MERCK PATENT GESELLSCHAFT MIT BESCHRÄNKTER HAFTUNG**
**Frankfurter Strasse 250**
**W-6100 Darmstadt(DE)**

(72) Inventor: **Finkenzeller, Ulrich, Dr.**
**Waldpfad 74**
**W-6831 Plankstadt(DE)**
Inventor: **Bonaccini, Domenico, Dr.**
**Osserv. Astrofisico di Acetri, Lago E. Fermi 5**
**I-50125 Firenze(IT)**

(54) Liquid crystal wave front corrector.

(57) The invention relates to a liquid crystal wave front corrector (LCWFC) comprising two liquid crystal layers sandwiched between transparent substrates exhibiting on their insides electrode layers with superposed alignment layers, the liquid crystal being aligned homogeneously and substantially free of twist with the alignment directions in the layers being essentially perpendicular to each other.

EP 0 459 306 A2

The invention relates to a liquid crystal wave front corrector (LCWFC).

It is well established that liquid crystal cells the liquid crystal layer of which being essentially free of twist, can be used to produce electrically tunable optical retardations. The optical path length is different for light with a polarization axis parallel to the long axis of the directors than for light with a polarization axis orthogonal to such axis. Considering, for example, light impinging perpendicularly on a cell with a nematic liquid crystal layer essentially free of twist, the optical retardation is maximum if the liquid crystal molecules are aligned homogenously, and amounts to the optical anisotropy or birefringence $\Delta n$ multiplied by the cell thickness d. If, on the other hand, the liquid crystal molecules are aligned homeotropically there is essentially no optical path difference for the two polarization components and the retardation is substantially zero. One of these two cases of liquid crystal orientation usually corresponds to the off-state of the cell while the other one is usually realized by applying a sufficiently high voltage and is termed the "fully driven state". This variation of the optical retardation between a non-driven and a fully driven state forms the basis for a number of known light modulators. A cell, the nematic liquid crystal molecules of which being aligned homogenously in the off-state can perform a polarization rotation for light polarized 45 degrees with respect to the alignment pattern and acts as a variable waveplate. The same cell can produce, for example, an electrically variable optical path length for light polarized parallel to the alignment pattern which is useful in a variety of systems including etalons. Liquid crystal tunable optical retarders are further useful, for example, in forming birefringent bandpass filters as is described, for example, in WO 84/04 402. These devices are special setups of Lyot filters and may employ several wave plates in concert with polarizers.

In the most general case, however, it is desirable to have optical systems employing unpolarized light. It is often necessary to correct distortions of the wave front, for example, after the wave has passed an optical construction element, and/or a layer of turbulent liquid and/or to change the wave front of unpolarized light in a controlled manner. The state of the art devices do not fulfill these requirements resp. meet them only to an insufficient degree.

It was an object of the present invention to provide a LCWFC which can be used to control the wave front of polarized or unpolarized light and to correct wavefront distortions if necessary.

It was another object of the present invention to provide a LCWFC for controlling the wave front of unpolarized light which exhibits short response times and/or more or less equal rise and decay times in order to obtain an adaptive optical element.

It was another object of the present invention to provide a LCWFC for controlling the wavefront of polarized and/or unpolarized light which is characterized by a low absorption especially in the IR.

Still other objects, features and attendant advantages of the present invention will become apparent to those skilled in the art from reading of the following detailed description taken in conjunction with the accompanying drawing.

It was found that these and other advantages can be achieved by providing the LCWFC according to the invention comprising two liquid crystal layers sandwiched between transparent substrates exhibiting on their insides electrode layers with superposed alignment layers, the liquid crystal being aligned homogenously and substantially free of twist with the alignment directions in the layers being essentially perpendicular to each other.

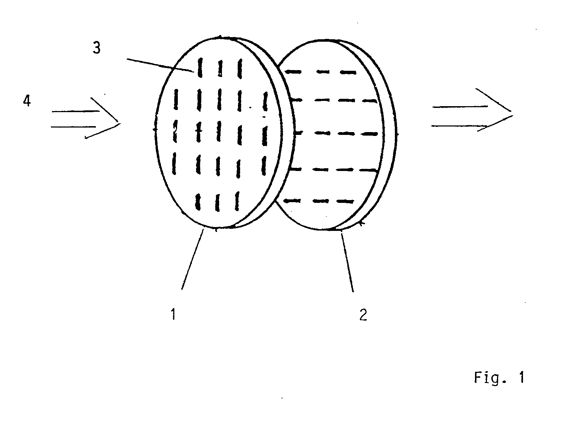

The set-up ot the LCWFC according to the invention is schematically shown in Fig. 1. Each liquid crystal layer is sandwiched between 2 transparent, planparallel substrates the insides of which exhibit transparent electrode layers with superpositioned transparent alignment layers.

The substrates are usually made of glass or suitable plastics if the device is predominantly operated in the UV or visible range of the spectrum while in the IR $CaF_2$ or other materials with a high IR transmission coefficient are generally preferred. The liquid crystal layers are usually separated by one common middle substrate; it is, however, also possible though not preferred to use 2 different middle substrates because it is generally desired to maximize the transmittance of the device. The thickness of the liquid crystal layers is usually between 2 $\mu$m and 100 $\mu$m and does preferably not exceed 50 $\mu$m. Greater thicknesses imply higher driving voltages. The thickness may also be optimized in terms of the desired $d.\Delta n$ to be achieved.

Thin plain transparent electrodes, usually of indium tin oxide (ITO) or indium oxide ($In_2O_3$) or other transparent materials of low resistivity, are coated on the inner surface of these substrates. The homogenous or planar alignment of the liquid crystal layers can be obtained, for example, by vacuum deposition of a range of inorganic materials such as SiO, $MgF_2$ etc. onto the surfaces of the substrates at angles of about 20 % as is described, for example, in J. Jannini, Appl. Phys. Lett. 21 (1972) 173. It is also possible to use a low-tilt alignment which can be obtained by precoating the substrates with a thin organic layer of, for example, polyim-ide or PVA and subsequent rubbing. Pretilt angles between $0°$ and $5°$, especially between $0°$ and $3°$ and in particular between $0°$ and $1,5°$ are preferred; LCWFC exhibiting more, or less the same pretilt angle in both liquid crystal layers are preferred.

The liquid crystal media employed in the LCWFC according to the invention are dielectrically positive $\Delta\epsilon > 0$ at a frequency of $V = 0$ of the applied voltage and preferably contain nematic or nematogenic (monotropic or isotropic) substances, in particular substances from the classes of azoxybenzenes, benzylideneanilines, biphenyls, terphenyls, phenyl or cyclohexyl benzoates, phenyl or cyclohexylcyclohexanecarboxylates, phenyl or cyclohexyl esters of cyclohexylbenzoid acid, phenyl or cyclohexyl esters of cyclohexylbenzoic acid, phenyl or cyclohexyl esters of cyclohexylcyclohexanecarboxylic acid, phenylcyclohexanes, cyclohexylbiphenyls, phenylcyclohexylcyclohexanes, cyclohexylcyclohexanes, cyclohexylcyclohexenes, cyclohexylcyclohexylcyclohexenes, 1,4-bis-cyclohexylbenzenes, 4,4'-bis-cyclohexylbiphenyls, phenyl- or cyclohexylpyrimidines, phenyl- or cyclohexylpyridines, phenyl- or cyclohexyldioxanes, phenyl- or cyclohexyl-1,3-dithianes, 1,2-diphenylethanes, 1,2-dicyclohexylethanes, 1-phenyl-2-cyclohexylethanes, 1-cyclohexyl-2-(4-phenyl-cyclohexyl)-ethanes, 1-cyclohexyl-2-biphenylylethanes, 1-phenyl-2-cyclohexylphenylethanes, optionally halogenated stilbenes, benzyl phenyl ethers, tolans and substituted cinnamic acids. The 1,4-phenylene groups in these compounds can also be laterally substituted.

The liquid crystal media are preferably composed of 2 to 40 and in particular 3 to 30 components. Further preferable constituents of the liquid crystal media can be characterized by the following formulae 1, 2, 3, 4 and 5:

R'-L-E-R''   1

R'-L-COO-E-R''   2

R'-L-OOC-E-R''   3

R'-L-CH$_2$CH$_2$-E-R''   4

R'-L-C$\equiv$C-E-R''   5

In the formulae 1, 2, 3, 4 and 5, L and E, which can be identical or different, in each case independently of one another are a bivalent radical from the group comprising -Phe-, -Cyc-, -Phe-Phe-, -Phe-Cyc-, -Cyc-Cyc-, -Pyr-, -Dio-, -G-Phe- and -G-Cyc- and mirror images thereof, wherein Phe is 1,4-phenylene which is unsubstituted or substituted by fluorine, Cyc is trans-1,4-cyclohexylene or 1,4-cyclohexenylene, Pyr is pyrimidine-2,5-diyl or pyridine-2,5-diyl, Dio is 1,3-dioxane-2,5-diyl and G is 2-(trans-1,4-cyclohexyl)-ethyl, pyrimidine-2,5-diyl, pyridine-2,5-diyl or 1,3-dioxane-2,5-diyl.

Preferably, one of the radicals L and E is Cyc, Phe or Pyr. E is preferably Cyc, Phe or Phe-Cyc. The liquid crystal media preferably contain one ore more components chosen from the compounds of the formulae 1, 2, 3, 4 and 5, wherein one of the radicals L and E is chosen from the group comprising Cyc, Phe and Pyr and the other radical is chosen from the group comprising -Phe-Phe-, -Phe-Cyc-, -Cyc-Cyc-, -G-Phe- and -G-Cyc-, and if appropriate one ore more components chosen from the compounds of the formulae 1, 2, 3, 4 and 5 wherein the radicals L and E are chosen from the group comprising -Phe-Cyc-, -Cyc-Cyc-, -G-Phe- and -G-Cyc-.

R' and R'' in the compounds of the part formulae 1a, 2a, 3a, 4a and 5a in each case independently of one another are alkyl, alkenyl, alkoxy, alkenyloxy or alkanoyloxy having up to 8 carbon atoms. In most of these compounds, R' and R'' differ from one another, one of these radicals usually being alkyl or alkenyl. In the compounds of the part formulae 1b, 2b, 3b, 4b and 5b, R'' is -CN, -CF$_3$, F, Cl or -NCS; R here has the meaning given in the case of the compounds of the part formulae 1a to 5a, and is preferably alkyl or alkenyl. However, other variants of the envisaged substituents in the compounds of the formulae 1, 2, 3, 4 and 5 can also be used. Many such substances or mixtures thereof are commercially available. All these substances are obtainable by methods which are known from the literature or by analogous methods.

The liquid crystal media preferably also contain, in addition to components from the group of compounds 1a, 2a, 3a, 4a and 5a (group 1), components from the group of compounds 1b, 2b, 3b, 4b and 5b (group 2), the propertions of which are preferably as follows:

Group 1:   20 to 90 %, in particular 30 to 90 %,
Group 2:   10 to 80 %, in particular 10 to 50 %,

The liquid crystal media may contain suitable liquid crystal or non-liquid crystal additives.

Such additives are known to the expert and are described in detail in the literature (H. Kelker/R. Hatz, Handbook of Liquid Crystals, Verlag Chemie, Weinheim 1980). For example, it is possible to add pleochroic dyestuffs to prepare coloured LCWFC's or substances to change the dielectric anisotropy, the viscosity and/or other parameters of the nematic phase.

The liquid crystal media preferably exhibit a rather large optical anisotropy or birefringence $\Delta n$ in order to realize a large maximum retardation $d.\Delta n$. The birefringence $\Delta n$ preferably is $\Delta n \geq 0.08$, especially $\Delta n \geq 0.12$ and in particular $\Delta n \geq 0.18$. Because of the dispersion the liquid crystal media have to be optimized with respect to the operation range of the spectrum; it is generally not prefered to use one and the same liquid crystal medium for the IR, UV and visible range of the spectrum.

With respect to the birefringence two aspects usually have to be considered first of all:

(i) it is generally desired to maximize $\Delta n$ in the operation range of the spectrum in order to realize a large tunable optical retardation $d.\Delta n$.

(ii) the dispersion of the birefringence should be small in the operation range of the spectrum in order to obtain a wave front correction being essentially independent from the wave length.

The requirements (i) and (ii) are generally not fulfilled at the same time to the utmost degree but a compromise has usually to be found taking into account the specific application. Anyone skilled in the art can choose compounds from the large pool of nematic or nematogenic substances mentioned above and design liquid crystal mixtures being optimally suited for specific requirements without further elaboration. It should be noted that the dispersion of birefringence is usually rather low in the IR as has experimentally been confirmed (Shin-Tson Wu/, Phsy. Rev. A, 33 (1986), (2), 1270) and can be made plausible theoretically. Birefringence originates from the differential molecular polarizability of LC compounds, which is directly proportional to the sum of the individual electronic absorption anisotropies. Using the Maier-Meir equations (W. Maier, G. Meier, Z. Naturforsch. 1617 (1961) 226) and the Vuks equation (M.F. Vuks, Opt. Spectrosc. 1966, 644) the birefringence in the visible and near IR region can be expressed via

$$\Delta n = G(T) \; \frac{\lambda \cdot \lambda_R^2}{\lambda_R^2 - \lambda_R^2} \qquad (1)$$

wherein

$$G = g.N.Z.S \, (f^*_{par} - f^*_{perp}),$$

$g$ is a proportional constant independent of the liquid crystal medium, $N$ is the number of molecules per volume, $Z$ is the number of active electrons per LC molecule, $S$ is the order parameter of the LC and

$$f^*_{par} - f^*_{perp}$$

is the differential oscillator strength at the mean resonance wavelenth $\lambda_R$; $\lambda_R$ is usually in the UV region of the spectrum. For $\lambda > \lambda_R$ equation (1) can be expanded to the usual Cauchy formula (2)

$$\Delta n \cong G \cdot \lambda_R^2 \left[ 1 + \left(\frac{\lambda_R}{\lambda}\right)^2 + \left(\frac{\lambda_R}{\lambda}\right)^4 + \dots \right] \qquad (2)$$

In the IR $\lambda \gg \lambda_R$ and therefore $\Delta n \cong G \cdot \lambda_R^2$, which is independent from the operating wavelength except in the vicinity of molecular vibration bands. Therefore, in the IR the requirement (ii) mentioned above is usually fulfilled so that the properties of the liquid crystal medium in the IR can generally be optimized simply by taking into account the requirement (i).

The liquid crystal media in the 2 cells of the LCWFC according to the invention can be of the same composition or can be different from each other. The use of liquid crystal media with the same composition in both cells is generally prefered. The use of different media is, however, also possible and is preferred, for example, if the 2 polarization components are to be retarded to a different degree in the off-state of the LCWFC.

In Fig. 1 the off-state of a LGWFC according to the invention is shown schematically. The nematic liquid crystal molecules in both layers are aligned essentially homogenously and the alignment directions are essentially perpendicular to each other. Assuming that the liquid crystal media in both cells are of the same composition and that the pretilt angle is the same in both cells, for example $\alpha = 0°$, the optical retardation $d.\Delta n$ for unpolarized light impinging perpendicularly on the substrates is zero, because one of the polarization components is retarded in the first cell while the other component is unaffected and vice versa in the second cell. If, for example, a voltage is applied to the first cell while the second remains in the non-driven state the optical retardation becomes smaller for the polarization component which is retarded in the first cell and an overall effect of the LCWFC on the wave front of the unpolarized light is observed.

Using this principle is is possible to produce well-defined phase shifts and to control and change the wave front of light of any polarization state and especially of unpolarized light in a defined manner.

In a preferred embodiment of the LCWFC according to the invention at least one of the electrodes of each cell is subdivided in smaller compartments or in a matrix of single pixels which can be driven separately to give a certain electrode pattern which allows, for example, to transform a distorted wave front into a plane wave front or a plane wave front into a wave front being distorted in a defined manner and so on. This is especially important for applications in adaptive or active optics. It is of course not possible to specify a generally applicable electrode pattern but the electrode structure has carefully to be designed and optimized for the special optical set-up. It is possible, however, for anyone skilled in the art to develop an optimized electrode pattern for a certain application on the basis of this specification without further elaboration.

The response times of the cells of the LCWFC according to the invention can be estimated to be

$$\tau_R \ \alpha \ \frac{\gamma_1 d^2}{\dfrac{\Delta\epsilon \cdot V_\nu^2}{4\pi} - K_{11}\pi^2} \tag{3}$$

$$\tau_D \ \alpha \ \frac{\gamma_1 d^2}{K_{11} \ \pi} \tag{4}$$

wherein $\gamma_1$ is the rotational viscosity coefficient, d is the thickness of the liquid crystal layer, $\Delta\epsilon$ is the dielectric anisotropy, $V_\gamma$ is the applied voltage with the frequency V and $K_{11}$ is the splay elastic coefficient (see, for example, J.G. Pasko et al., SPIE 202 (1979) 82).

It is usually desired to obtain values as small as possible for the rise time $\tau_R$ and the decay time $\tau_D$. It is directly evident from equations (3) and (4) that $K_{11}$ and $\gamma_1$ are the driving parameters as far as the liquid crystal medium is concerned. On the other hand the layer thickness d plays an important role and therefore considering the simultaneous requirement of a large maximum optical retardation $d.\Delta n$, the optical anisotropy $\Delta n$ has also to be taken into account.

Liquid crystal media for use in the LCWFC according to the invention which exhibit a rotational viscosity $\gamma_1 \leqq 200$ mPa.s and especially $\gamma \leqq 180$ mPa.s at 20 °C are preferred.The splay elastic coefficient $K_{11}$ preferably is large.

Usually it is not possible to minimize $\gamma_1$ and to maximize $K_{11}$ and $\Delta n$ at the same time the more so as other requirements like, for example, a high chemical and/or UV stability of the liquid crystal medium, a high clearing point, a wide nematic range and so on have to be considered. The expert, however, is aware of the relationship between $\tau_R$ resp. $\tau_D$ and $\gamma_1$, $K_{11}$ and $\Delta n$ as is expressed by formulae (3) and (4). When designing a liquid crystal medium he can easily choose liquid crystal compounds from the great pool of nematic or nematogenic compounds in such a way that the properties of the medium are optimized with respect to the specific application.

It is further evident from equations (3) and (4) that the rise time $\tau_R$ and the decay time $\tau_D$ are usually different from each other. LCWFC's according to the invention with essentially symmetrical use and decay times $\tau_R \cong \tau_D$ are, however, generally preferred.

The values of the response times $\tau_R$ and $\tau_D$ can more or less be equalized by applying the dual-field effect as is described, for example, in Shin-Tson Wu, J. Appl. Phys. 58 (1985), 1419 and/or the dual-frequency effect.

The dual-field effect is based on applying an external magnetic field being oriented parallel to the substrate surface. This gives a constant restoration force to the molecules and therefore a reduction of the decay time $\tau_D$; the rise time can of course be influenced via the applied voltage $V_\nu$ (see equation (3)).

The dual-frequency effect can be applied to liquid crystal media which exhibit a change of sign of the dielectric anisotropy $\Delta\epsilon$ usually at low frequencies. This means that one can use an electric field with two different, for example, sinusodial wave forms, with different amplitude and frequency. The frequencies are chosen so that $\Delta\epsilon$ has opposite signs for the 2 components of the electrical field; one of the components, for example the low-frequency part, is used to force the liquid crystal molecules parallel to the substrates while the other component provides a perpendicular molecular orientation. Thus, the restoring elastic force is increased and $\tau_D$ is reduced.

Taking into account both the dual-frequency and the dual-field effect the following equation (5) and (6) can be derived for the rise and decay times $\tau_R$ and $\tau_D$:

$$\tau_R = \gamma_1 \left[ \frac{\mathrm{abs}\ (\Delta\epsilon_{\nu,R}) \cdot E_{\nu,R}^2}{4\pi} - K_{11}\left(\frac{\pi}{d}\right)^2 - \frac{4\pi\,\Delta\chi}{Mo} \cdot B \right]^{-1} \quad (5)$$

$$\tau_D = \gamma_1 \left[ K_{11}\left(\frac{\pi}{d}\right)^2 + \frac{4\pi\,\Delta\chi}{\mu o}B^2 + \frac{\mathrm{abs}\ (\Delta\epsilon_{\nu,R}) \cdot E_{\nu,R}^2}{4\pi} \right]^{-1} \quad (6)$$

wherein $\Delta\chi$ is the magnetic anisotropy, $\Delta\epsilon_{\nu,R}$ resp $\Delta\epsilon_{\nu,D}$ is the dielectric anisotropy $\Delta\epsilon$ at the frequency $\nu$ for the rise resp. the decay process, $E_{\nu,R}$ resp. $E_{\nu,D}$ is the amplitude of the component of the electric field at frequency driving the rise resp. the decay process, B is the applied magnetic field and the meaning of $\gamma_1$, $K_{11}$ and d is the same as given above.

It is evident from equations (5) and (6) that it is possible to reduce and/or symmetrize the response times of a LCWFC according to the invention by applying the dual-field and/or the dual-frequency effect.

It should be noted further that by using at least one of these effects the selection criteria for the liquid crystal media become much easier than those mentioned above. Considering the usual operation mode of a LCWFC without applying the double-field or double-frequency effect, the electric field has to overcome the elastic force during the rise process and the movement is dumped by the rotational viscosity $\gamma_1$ of the liquid crystal medium. The elastic force is mainly determined by $K_{11}$. During the decay process there is only the elastic force acting, again with a dumping viscous factor.

By using the dual-field and/or the dual-frequency effect, however, the importance of the elastic properties of the liquid crystal medium is reduced since the restoring elastic force is increased. Therefore, when designing a liquid crystal medium for a LCWFC according to the invention which is to be operated under dual-frequency or dual-field conditions the value of $K_{11}$ is less critical and one can concentrate on optmizing the values of $\Delta n$ and $\gamma_1$. Therefore, the expert can design liquid crystal media especially for dual-frequency and/or dual-field applications without further elaboration or any inventive contribution.

The LCWFC according to the present invention can be used both for adaptive and active optics or for wave-front modulation. Adaptive optics implies a wave-front modulation/correction in real time, with time responses lower than 0.1 sec. Active optics is for time responses $\geq$ 0.1 sec.

Typical problems to be solved in adaptive optics are, for example, the correction of effects of atmospheric turbulence on images passing through it or the corrrection of a wave-front passing through any fluid.

In active optics LCWFC are used for the correction of precision optics like, for example, photographic objectives, telescopes or space optics. By incorporating a LCWFC as an "active optical element" into an optical set-up the tolerances and finishing requirements on the glass optic care often much more relaxed resulting in a considerable decrease in costs. Other examples are the correction of shortcomings of low-cost and diffraction limited optics such as static aberration due to fabrication, or thermal stress.

In adaptive optics short response times are usually desired so that the use of the dual field and/or dual frequency effect is often preferred. Contrary to this the requirements in the field of active optics are often less stringent and the use of the dual field and/or dual frequency effect in general can be omitted.

Without further elaboration, it is believed that one skilled in the art can, using the preceding description, utilize the present invention to its fullest extent. The following preferred specific embodiments are, therefore, to be construed as merely illustrative, and not limitative of the remainder of the disclosure in any way whatsoever.

In the foregoing and in the following examples, all temperatures are set forth uncorrected in degrees Celsius and unless otherwise indicated, all parts and percentages are by weight.

The abbreviations have the following meanings:

C:     Crystalline solid state,
S:     Smectic phase (the index denotes the phase type),
N:     Nematic phase,
Ch:    Cholesteric phase,
I:     Isotropic phase.

The number between 2 symbols indicates the conversion temperature in degrees Celsius.

Example 1

A LCWFC containing a liquid crystal medium consisting of
16.0 % of p-trans-4-propylcyclohexyl-benzonitril
5.0 % of p-trans-4-pentylcyclohexyl-benzonitril
17.0 % of p-trans-1-p-ethylphenyl-4-propylcyclohexan
17.0 % of p-trans-1-p-methoxyphenyl-4-propylcyclohexan
11.0 % of 4-ethyl-4'-(trans-4-propylcyclohexyl)-biphenyl
11.0 % of 4-ethyl-4'-(trans-4-pentylcyclohexyl)-biphenyl
4.0 % of 4,4'-bis-(trans-4-propylcyclohexyl)-biphenyl
6.0 % of 4-(trans-4-pentylcyclohexyl)-4'-(trans-4-propylcyclohexyl)-biphenyl
3.0 % of 4,4'-bis-(trans-4-propylcyclohexyl)-2-fluorobiphenyl
4.0 % of 4,4'-bis-(trans-4-pentylcyclohexyl)-2-fluorobiphenyl
6.0 % of 4-(trans-4-pentylcyclohexyl)-4'-(trans-4-propylcyclohexyl)-2-fluorobiphenyl
exhibits, when being operated under the dual-field condition with B $\cong$ 12 kG, a decay time $\tau_D$ which is reduced by one order of magnitude compared with the decay time observed in the common mode of operation with B = 0.

Example 2

A LCWFC containing a liquid crystal medium consisting of
35 %6 4-(trans-4-propylcyclohexyl)-phenyl trans-4-propylcyclohexyl-carboxylat
16 % 4-(trans-4-butylcyclohexyl)-phenyl trans-4-propylcyclohexyl-carboxylat
16 % 4-(trans-4-pentylcyclohexyl)-phenyl trans-4-propylcyclohexyl-carboxylat
11 % 2-cyano-4-butyl-phenyl-4-trans-4-propylcyclohexy)-benzoat

5 % 2-cyano-4-butyl-phenyl-4-(4-hexoxy-benzoyloxy)-benzoat
8 % 4-propyl-phenyl 4-(trans-4-propyl-cyclohexyl)-benzoat
1 % 4-cyano-phenyl 4-(4-propyl-benzoyloxy)-benzoat
0.8 % 4-cyano-phenyl 4-(4-butyl-benzoyloxy)-benzoat
0.7 % 4-cyano-phenyl 4-(4-pentyl-benzoyloxy)-benzoat
0.5 % 4-cyano-phenyl 4-(4-hexoxy-benzoyloxy)-benzoat
2 % 4-butyl-phenyl 4-(4-butyl-benzoyloxy)-benzoat
2 % 4-pentyl-phenyl 4-(4-pentyl-benzoyloxy)-benzoat
2.5 % 4-(4-cyanophenyl)-phenyl 4-(4-pentylphenyl)-benzoat
2.5 % 4-(4-cyanophenyl)-phenyl 4-(4-heptylphenyl)-benzoat
is operated under the dual-frequency condition.

Example 3

A LCWFC containing a liquid crystal medium consisting of
35 % 4-(trans-4-propylcyclohexyl)-phenyl trans-4-propylcyclohexyl-carboxylat
16 % 4-(trans-4-butylcyclohexyl)-phenyl trans-4-propylcyclohexyl-carboxylat
11 % 4-(trans-4-pentylcyclohexyl)-phenyl trans-4-propylcyclohexyl-carboxylat
11 % 2-cyano-4-butyl-phenyl-4-trans-4-propylcyclohexy)-benzoat
5 % 2-cyano-4-butyl-phenyl-4-(4-hexoxy-benzoyloxy)-benzoat
8 % 4-propyl-phenyl 4-(trans-4-propyl-cyclohexyl)-benzoat
2 % 4-cyano-phenyl 4-(4-propyl-benzoyloxy)-benzoat
1.5 % 4-cyano-phenyl 4-(4-butyl-benzoyloxy)-benzoat
1.5 % 4-cyano-phenyl 4-(4-pentyl-benzoyloxy)-benzoat
1 % 4-cyano-phenyl 4-(4-hexoxy-benzoyloxy)-benzoat
4 % 4-butyl-phenyl 4-(4-butyl-benzoyloxy)-benzoat
2 % 4-(4-cyanophenyl)-phenyl 4-(4-pentylphenyl)-benzoat
2 % 4-(4-cyanophenyl)-phenyl 4-(4-heptylphenyl)-benzoat
is operated under the dual-frequency condition.

Fig. 1:   LCWFC (schematically)
            1 First liquid crystal cell
            2 Second liquid crystal cell
            3 Liquid crystal molecules
            4 Impinging light

## Claims

1. Liquid crystal wave front corrector (LCWFC) comprising two liquid crystal layers sandwiched between transparent substrates exhibiting on their insides electrode layers with superposed alignment layers, the liquid crystal being aligned homogeneously and substantially free of twist with the alignment directions in the layers being essentially perpendicular to each other.

2. LCWFC according to claim 1 characterized in that the liquid crystal exhibits a large birefringence $\Delta n \geq 0.08$ throughout the operation range.

3. LCWFC according to at least one of the claims 1 to 2 characterized in that the liquid crystal exhibits a low rotational viscosity $\gamma_1 \leq 2.00$ mPa.S at 20 °C.

4. LCWFC according to at least one of the claims 1 to 3 characterized in that the restoring elastic force acting on the liquid crystal molecules is increased by employing the dual-field effect and/or the dual-frequency effect in order to reduce and/or symmetrize the switching times $\tau_R$ and $\tau_D$.

5. LCWFC according to at least one of the claims 1 to 4 characterized in that it exhibits an electrode pattern for controlling the wave form of transmitted light.

6. LCWFC according to at least one of the claims 1-5 characterized in that both liquid crystal layers exhibit the same composition.

7. LCWFC according to at least one of claims 1-6 characterized in that the liquid crystal and the materials for the substrates, electrode and alignment layer are chosen to give a low absorption in the visible and IR.

8. Use of a LCWFC for adaptive or active optics.

9. Liquid crystal being identical with the liquid crystal used in the LCWFC according to at least one of the claims 1 to 7.

Fig. 1